# EUROPEAN PATENT APPLICATION

(11) **EP 2 623 178 A1**
(43) Date of publication of application: **07.08.2013**
(21) Application number: 12153853.2
(22) Date of filing: 03.02.2012
(51) Int. Cl.: B01D 53/04

(54) **A gas processing unit comprising a device for removing nitrogen oxides.**

(71) Applicant: Alstom Technology Ltd, 5400 Baden (CH)
(72) Inventor: Nilsson, Lars, 360 40 Rottne (SE)

(57) **Abstract**

A gas purification system for cleaning a carbon dioxide rich flue gas stream comprises:
a flue gas condenser (36) operative for removing at least a portion of a water content of the flue gas;
a gas drier (70) arranged downstream of the flue gas condenser (36) for removing at least a portion of a remaining water content of the flue gas;
a gas drier regeneration system (84) arranged for generating a regeneration gas for desorbing water and nitrogen oxides from the gas drier (70); and
a wet scrubber (114) for a spent regeneration gas from the gas drier (70) to contact an absorption liquid for removing at least a portion of nitrogen oxides from the spent regeneration gas to form a cleaned regeneration gas.

## Description

### Field of the Invention

The present invention relates to a method of cleaning a carbon dioxide rich flue gas generated in a boiler combusting a fuel in the presence of a gas containing oxygen gas.

The present invention further relates to a gas purification system for cleaning a carbon dioxide rich flue gas stream generated in a boiler combusting a fuel in the presence of a gas containing oxygen gas.

### Background of the Invention

In the combustion of a fuel, such as coal, oil, peat, waste, etc., in a combustion plant, such as a power plant, a hot process gas is generated, such process gas containing, among other components, carbon dioxide CO₂. With increasing environmental demands various processes for removing carbon dioxide from the process gas have been developed. One such process is referred to as an oxy-fuel process. In an oxy-fuel process a fuel, such as one of the fuels mentioned above, is combusted in the presence of a nitrogen-lean gas in a boiler. Oxygen gas, which is provided by an oxygen source, is supplied to the boiler for oxygen gas oxidation of the fuel. In the oxy-fuel combustion process a carbon dioxide rich flue gas is produced. The CO₂ content of the carbon dioxide rich flue gas may be captured and disposed of in order to reduce the emission of carbon dioxide into the atmosphere.

CO₂ capture often comprises compression and cooling of a flue gas to separate CO₂ in liquid or solid form from non-condensable flue gas components, such as N₂ and O₂. Prior to CO₂ capture, it is generally necessary to clean the carbon dioxide rich flue gas.

US 2010/0206165 discloses a process in which a purification step is carried out between a cleaning of a carbon dioxide containing gas stream and a recovery of a purified CO₂-rich gas stream. The purification step involves utilizing an adsorbent for removing water from the gas stream.

### Summary of the Invention

An object of the present invention is to provide a method of removing water from a gas stream in a manner more efficient than that of the prior art.

This object is achieved by a method of cleaning a carbon dioxide rich flue gas generated in a boiler combusting a fuel in the presence of a gas containing oxygen gas, the method comprising:
removing at least a portion of a water content of the flue gas in a flue gas condenser;
removing at least a portion of a remaining water content of the flue gas and at least a portion of a content of nitrogen oxides of the flue gas using a gas drier arranged downstream of the flue gas condenser;
regenerating the gas drier by heating a flow of regeneration gas to a temperature suitable for regeneration of the gas drier, and passing the heated regeneration gas through the gas drier to desorb water and nitrogen oxides from the gas drier producing a spent regeneration gas; and
forwarding spent regeneration gas from the gas drier to a wet scrubber and bringing the spent regeneration gas into contact with an absorption liquid for removing at least a portion of nitrogen oxides from the spent regeneration gas to form a cleaned regeneration gas.

An advantage of this method is that the release of nitrogen oxides to the environment is limited using a very efficient process, with low investment and operating costs. The operating conditions of the gas drier allows the gas drier to operate as a nitrogen oxides collector, with the wet scrubber functioning as a cleaning device, ultimately removing nitrogen oxides from the carbon dioxide rich flue gas.

According to one embodiment the method further comprises forwarding a flow of cleaned regeneration gas from the wet scrubber to the flue gas condenser for cooling therein. An advantage of this embodiment is that release of unwanted gases, such as carbon dioxide and nitrogen oxides, to the atmosphere is limited, and extensive treatment processes are avoided, since the spent regeneration gas is treated in equipment, i.e., the flue gas condenser, already utilized in the same method for other purposes.

According to one embodiment the method further comprises supplying an oxidizer to the absorption liquid of the wet scrubber. An advantage of this embodiment is that the capture of nitrogen oxides in the wet scrubber, in particular nitrogen monoxide, NO, is further enhanced.

According to one embodiment the method further comprises obtaining a flow of regeneration gas by withdrawing a portion of the carbon dioxide rich flue gas downstream of the flue gas condenser. An advantage of this embodiment is that process gas already internal to the process is utilized. This reduces operating costs without increasing the amount of carbon dioxide ultimately sent for sequestration.

According to one embodiment the method further comprises obtaining a flow of regeneration gas by withdrawing a portion of the carbon dioxide rich flue gas upstream of the gas drier. An advantage of this embodiment is that a gas which has not yet been dried is utilized as regeneration gas. This reduces operating costs.

According to one embodiment the method further comprises supplying a pH controlling substance to the absorption liquid of the wet scrubber. An advantage of this embodiment is that, for example, acid compounds formed by the capture of nitrogen oxides in the wet scrubber absorption liquid may be neutralized, thereby increasing the nitrogen oxide capture efficiency.

According to one embodiment the wet scrubber is separate from the flue gas condenser. An advantage of this embodiment is that the wet scrubber and the flue gas condenser can each be optimized for its respective task.

According to one embodiment the method further comprises forwarding spent regeneration gas from the gas drier through the wet scrubber during a scrubbing period forming a part of a regeneration period during which the gas drier is regenerated, and controlling the duration and timing of the scrubbing period based on a release of nitrogen oxides from the gas drier. An advantage of this embodiment is that consumables such as energy and oxidizer may be saved, since the wet scrubber is only operated when needed.

A further object of the present invention is to provide a gas purification system efficient for cleaning a carbon dioxide rich flue gas stream.

This object is achieved by a gas purification system for cleaning a carbon dioxide rich flue gas stream generated in a boiler combusting a fuel in the presence of a gas containing oxygen gas, the gas purification system comprising:
a flue gas condenser operative for removing at least a portion of a water content of the flue gas;
a gas drier arranged downstream of the flue gas condenser based on the flow direction of the carbon dioxide rich flue gas, for removing at least a portion of a remaining water content of the flue gas and at least a portion of a content of nitrogen oxides of the flue gas;
a gas drier regeneration system arranged for generating a regeneration gas for desorbing water and nitrogen oxides from the gas drier; and
a wet scrubber for contacting a spent regeneration gas from the gas drier with an absorption liquid for removing at least a portion of nitrogen oxides from the spent regeneration gas to form a cleaned regeneration gas.

An advantage of this system is that the release of nitrogen oxides to the environment is limited using a very efficient system.

According to one embodiment, the system further comprises a duct for flow of cleaned regeneration gas from the wet scrubber to the flue gas condenser for cooling therein. An advantage of this embodiment is that very low emissions of nitrogen oxides and of carbon dioxide to the environment may be achieved.

According to one embodiment, the system further comprises a supply duct arranged downstream of the flue gas condenser based on the flow direction of the carbon dioxide rich flue gas for regeneration gas flow to the gas drier regeneration system. An advantage of this embodiment is that process gas already internal to the process is utilized as a regeneration gas. This reduces operating costs and the volume of gas requiring treatment.

According to one embodiment the gas drier contains a solid adsorbent. An advantage of this embodiment is that solid adsorbents are often efficient in removing water vapour, such that flue gas leaving the gas drier has a low concentration of water vapour, which may be suitable for the further handling of the flue gas.

According to one embodiment, the system further comprises an oxidizer supply pipe arranged for supplying an oxidizer to the absorption liquid of the wet scrubber. An advantage of this embodiment is that the capability of the wet scrubber to remove nitrogen oxides, and in particular nitrogen mono-oxide, NO, is enhanced.

According to one embodiment, at least one compressor for compressing the carbon dioxide rich flue gas is arranged downstream of the flue gas condenser and upstream of the gas drier, based on the flow direction of the carbon dioxide rich flue gas. A supply duct is arranged upstream of the compressor based on the flow direction of the carbon dioxide rich flue gas for regeneration gas flow to the gas drier regeneration system. An advantage of this embodiment is that regeneration may be accomplished using regeneration gas collected prior to being compressed, hence reducing operating costs. A further advantage is that compression of the carbon dioxide rich flue gas promotes oxidation of nitrogen mono-oxide, NO, to form nitrogen dioxide, NO₂. Hence, a larger portion of the nitrogen oxides captured in the gas drier, and forwarded to the wet scrubber after the regeneration, are already in an oxidized state, which reduces the need for a supply of oxidizer to the wet scrubber.

According to one embodiment at least one pH controlling substance supply pipe is arranged for supplying a pH controlling substance to the absorption liquid of the wet scrubber.

The above described and other features are exemplified by the following figures and detailed description. Further objects and features of the present invention will be apparent from the description and the claims.

### Brief description of the Drawings

The invention is described in more detail below with reference to the appended drawings in which:
Fig. 1 is a schematic side view of a boiler system.
Fig. 2 is a schematic side view of a gas compression and purification unit.
Fig. 3 is a schematic side view of a system for purifying spent regeneration gas.
Fig. 4 is a diagram illustrating the concentration of nitrogen oxides of spent regeneration gas during regeneration of a gas drier.
Fig. 5 is a schematic representation of a method of cleaning a carbon dioxide rich flue gas.

### Description of Preferred Embodiments

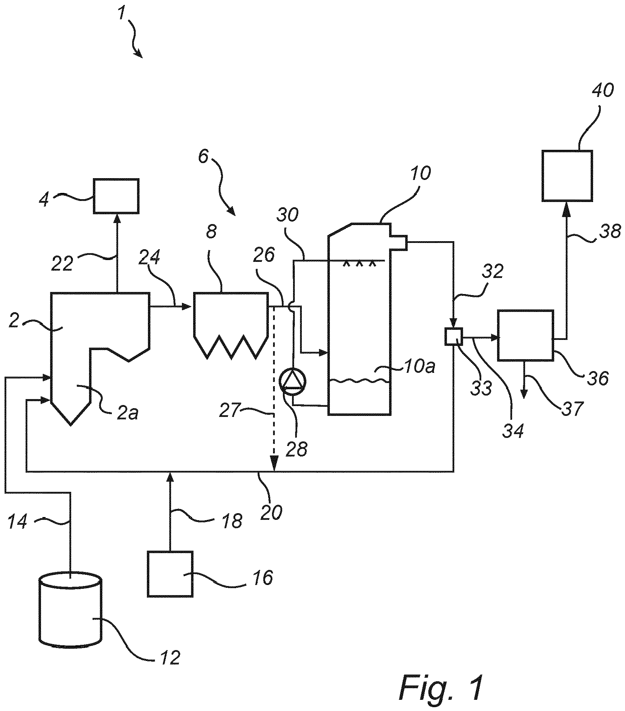

Fig. 1 is a schematic representation of a boiler system 1, as seen from the side thereof. The boiler system 1 comprises, as main components, a boiler 2, being in this embodiment an oxy-fuel boiler, a steam turbine electric power generation system 4, and a gas cleaning system 6. The gas cleaning system 6 comprises a particulate removal device 8, which may, for example, be a fabric filter or an electrostatic precipitator, and a sulphur dioxide removal system 10, which may be a wet scrubber.

A fuel, for example coal, oil, or peat, is contained in fuel storage 12, and can be supplied to the boiler 2 via a fluidly connected supply pipe 14. An oxygen gas source 16 is operative for supplying oxygen gas in a manner known to those skilled in the art. The oxygen gas source 16 may be an air separation plant operative for separating oxygen gas from air, an oxygen separating membrane, a storage tank, or any other source for providing oxygen gas to the boiler system 1. A supply duct 18 allows flow of the produced oxygen gas, comprising typically 90-99.9 % by volume oxygen, O₂, to the fluidly connected boiler 2. A duct 20 enables a flow of recirculated flue gas, which contains carbon dioxide, to the fluidly connected boiler 2. As indicated in Fig. 1, the supply duct 18 joins the duct 20 upstream of the boiler 2, such that oxygen gas and recirculated flue gas, containing carbon dioxide, may become mixed to form a gas mixture containing typically about 20-50 % by volume of oxygen gas, the balance being mainly carbon dioxide and water vapour, upstream of the boiler 2. Since almost no air enters the boiler 2 there is almost no nitrogen gas supplied to the boiler 2. In practical operation, less than 3 % by volume of the gas volume supplied to the boiler 2 is air, which mainly enters the boiler system 1 as a leakage of air via, for example, the boiler 2 and the gas cleaning system 6.

The boiler 2 is operative for combusting the fuel, supplied via the supply pipe 14, in the presence of the oxygen gas, mixed with the recirculated flue gas, containing carbon dioxide, supplied via the fluidly connected duct 20. Combustion occurs in a portion of the boiler referred to herein as the combustion zone 2a. A steam pipe 22 enables a flow of steam produced in the boiler 2 as a result of the combustion, to the steam turbine electric power generation system 4, operative for generating power in the form of electric power.

A duct 24 enables a flow of carbon dioxide rich flue gas generated in the boiler 2 to the fluidly connected dust removal device 8. "Carbon dioxide rich flue gas" as used herein means that the flue gas contains at least 40 % by volume of carbon dioxide, CO₂. Often more than 50% by volume of the flue gas leaving the boiler 2 will be carbon dioxide. Typically, the flue gas leaving boiler 2 will contain 50-80 % by volume of carbon dioxide. The balance of the "carbon dioxide rich flue gas" is about 15-40% by volume of water vapour (H₂O), 2-7 % by volume of oxygen (O₂), since a slight oxygen excess is often preferred in the boiler 2, and totally about 0-10 % by volume of other gases, including mainly nitrogen (N₂) and argon (Ar), since some leakage of air can seldom be completely avoided.

The carbon dioxide rich flue gas generated in the boiler 2 may typically comprise contaminants in the form of, for example, dust particles, hydrochloric acid, HCl, sulphur oxides, SOₓ, and heavy metals, including mercury, Hg, that should be removed, at least partly, from the carbon dioxide rich flue gas prior to disposing of the carbon dioxide. Furthermore, an amount of nitrogen oxides, i.e., nitrogen mono-oxide, NO, and/or nitrogen dioxide, NO₂, may also be generated in the boiler 2 from the leakage of air into the boiler 2, and/or from nitrogen species contained in the fuel supplied to the boiler 2.

The dust removal device 8 removes most of the dust particles from the carbon dioxide rich flue gas. A duct 26 enables a flow of carbon dioxide rich flue gas from the dust removal device 8 to the fluidly connected wet scrubber 10 of the gas cleaning system 6. The wet scrubber 10 comprises a circulation pump 28 operative for circulating, in a fluidly connected slurry circulation pipe 30, an absorption liquid. The absorption liquid comprises for example lime stone. The slurry circulation pipe 30 in the wet scrubber 10 achieves good contact between the absorption liquid and the flue gas flowing into the wet scrubber 10 via the fluidly connected duct 26 and flowing substantially vertically upwards inside 10a the wet scrubber 10 to effect efficient removal of sulphur dioxide, SO₂, and other acid gases from the carbon dioxide rich flue gas.

An at least partially cleaned carbon dioxide rich flue gas exits wet scrubber 10 via a fluidly connected duct 32 to a fluidly connected gas splitting point 33, where the at least partially cleaned carbon dioxide rich flue gas is divided into two flows, namely a first flow, which via the fluidly connected duct 20 is recirculated back to the boiler 2, and a second flow, which via a fluidly connected duct 34 is forwarded to a flue gas condenser 36. The first flow, which is recirculated back to the boiler 2 via duct 20, typically comprises 50 - 75% by volume of the total flow of the partially cleaned carbon dioxide rich flue gas leaving the wet scrubber 10. The second flow, typically comprising 25 - 50% by volume of the total flow of the partially cleaned carbon dioxide rich flue gas leaving the wet scrubber 10, is hence forwarded via the duct 34 to the flue gas condenser 36. According to an alternative embodiment, the first flow may be recirculated back to the boiler 2 via a fluidly connected duct 27 without passing through the wet scrubber 10.

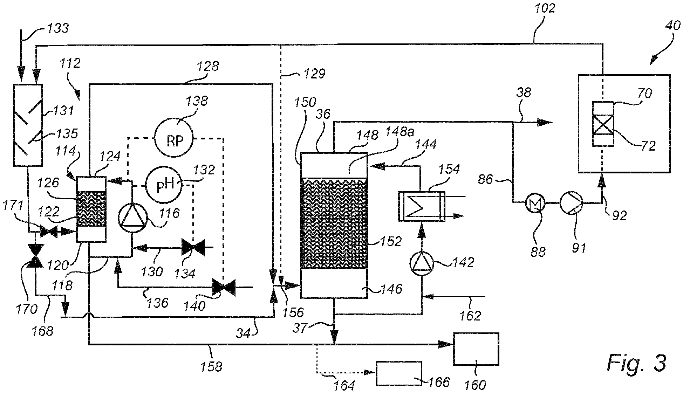

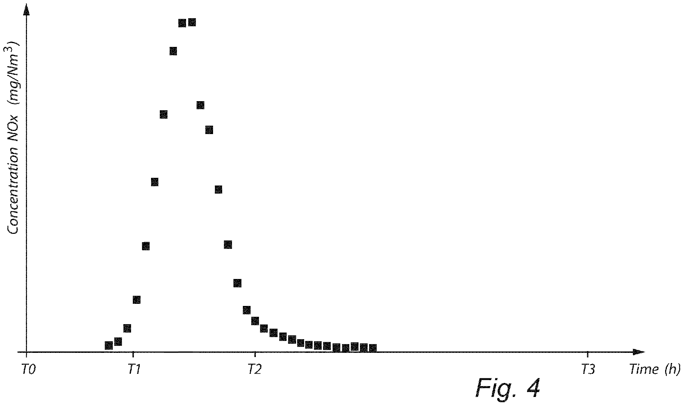

In the flue gas condenser 36, the flue gas is cooled below its water dew point and the heat released by the resulting condensation is recovered as low temperature heat. Examples of flue gas condensers are described in EP 2 335 804 A1 with reference to Figs. 3 and 4 of that document.

Returning to Fig. 1 of the present disclosure, the water content of the flue gas may for example be reduced from about 20-50 % by volume as fed into the flue gas condenser 36 to about 2-7 % by volume leaving the flue gas condenser 36. Depending on the pH and temperature in the flue gas condenser 36, flue gas condensation may also lead to a reduction of sulfur oxides, SOₓ, in the flue gas. Sulfur oxides in the flue gas are captured in the formed condensate and thereby separated from the flue gas. Furthermore, wash liquid or slurry, e.g., lime slurry, entrained in the flue gas from the preceding sulfur dioxide removal process, for example from the lime stone based wet scrubber 10, is likewise removed during the condensation. Hence, problems of fouling and/or clogging of downstream gas drier and/or gas heater surfaces are reduced. The flue gas condenser 36 is provided with a circulation pump operative for circulating a cooling liquid via a fluidly connected circulation pipe positioned in the flue gas condenser 36 in a manner which will be described in more detail hereinafter. The cooling liquid circulated in the flue gas condenser 36 cools the partially cleaned carbon dioxide rich flue gas to a temperature below its saturation temperature, with respect to water vapor. As such, condensation of at least a portion of the water vapor content of the partially cleaned carbon dioxide rich flue gas flowing from the wet scrubber 10 occurs. The condensed water leaves the flue gas condenser 36 via a fluidly connected disposal pipe 37. A portion of the condensed water leaving the flue gas condenser 36 via the pipe 37 may flow to the wet scrubber 10 as make up water. A further portion of the condensed water may flow to a water treatment unit, in which the condensed water is treated prior to being reused in the process, for example as boiler water, or disposal. The cleaned carbon dioxide rich flue gas leaves the flue gas condenser 36 via a fluidly connected duct 38 and flows to a gas compression and purification unit (GPU) 40.

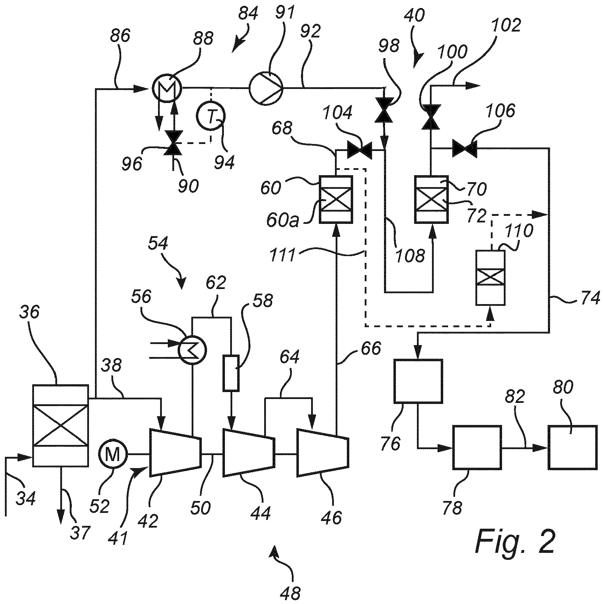

Fig. 2 illustrates an embodiment of the GPU 40 in more detail. It will be appreciated that the illustration of Fig. 2 is schematic, and that a GPU may comprise further devices for gas purification, etc.

The GPU 40 comprises at least one compressor having at least one, and typically two to ten compression stages for compressing the cleaned carbon dioxide rich flue gas. Each compression stage could be arranged as a separate unit. As an alternative, and as illustrated in Fig. 2, several compression stages could be operated by a common drive. The GPU 40 of Fig. 2 comprises a compressor 41 having a first compression stage 42, a second compression stage 44, and a third compression stage 46. The first through third compression stages 42, 44, 46 form together a low pressure compression unit 48 of the GPU 40. The compression stages 42, 44, 46 are connected to a common drive shaft 50 driven by a motor 52 of the compressor 41.

The low pressure compression unit 48 may comprise an inter-cooling unit 54, downstream of some, or all, of the compression stages 42, 44, 46. One such optional inter-cooling unit 54 is illustrated in Fig. 2 downstream of the first compression stage 42. The inter-cooling unit 54 comprises a gas cooler 56 and a gas-liquid separator 58. The gas cooler 56 cools the compressed carbon dioxide rich flue gas to a temperature below the dew point temperature with respect to water of the compressed carbon dioxide rich flue gas resulting in the condensation of the water vapour in the flue gas. The gas-liquid separator 58 separates water droplets, generated as an effect of condensation caused by the cooling of the gas in the gas cooler 56, from the remaining flue gas.

The GPU 40 may comprise a mercury adsorber 60 arranged downstream of one of the compression stages 42, 44, 46. In the embodiment of Fig. 2, the mercury adsorber 60 is arranged downstream of the third compression stage 46, i.e., downstream of the low pressure compression unit 48. It will be appreciated that the mercury adsorber 60 could also have been arranged for treating the flue gas between the first and second compression stages 42, 44, or between the second and third compression stages 44, 46.

The partially cleaned carbon dioxide rich flue gas enters the GPU 40 from the flue gas condenser 36 via the fluidly connected duct 38 and is introduced into the first compression stage 42. A duct 62 enables, optionally via the inter-cooling unit 54, the flow of compressed gas from the first compression stage 42 to the second compression stage 44. A duct 64 enables, optionally via an inter-cooling unit, not shown in Fig. 2, the flow of compressed gas from the second compression stage 44 to the third compression stage 46. A duct 66 enables the flow of compressed gas from the third compression stage 46 to the mercury adsorber 60. The mercury adsorber 60 is provided with a packing 60a comprising a mercury adsorbent having an affinity for mercury. The adsorbent may, for example, be activated carbon impregnated with sulphur, or another material that is, as such, known for its affinity for mercury. Ducts 68, 108 enable the flow of compressed gas, having an absolute pressure of about 25-35 bar, from the mercury adsorber 60 to a gas drier 70.

The gas drier 70 serves to remove at least a portion of the remaining content of water vapour from the compressed gas. Also, at least a portion of a content of nitrogen oxides, NOₓ, of the compressed gas may be adsorbed in the gas drier 70. The gas drier 70 is provided with a packing 72 comprising a solid adsorbent for adsorbing water vapour and optionally other gas components, such as nitrogen oxides. The solid adsorbent may, for example, comprise activated carbon, silica gel, activated aluminium oxide, zeolitic molecular sieves, such as sodium aluminosilicates, and carbon molecular sieves. A thorough description of various useful solid adsorbents is provided in chapter 2 of the Handbook "Adsorption aus der Gasphase", by Werner Kast, Wiley-VCH (1988), ISBN-10: 3527267190. A zeolitic molecular sieve is one example of such a suitable solid adsorbent. The internal surface area, "o", as described in the above referenced book by Werner Kast, of the solid adsorbent may preferably be at least 50 m²/g, and more preferably at least 250 m²/g. A zeolitic molecular sieve has an open structure through which small molecules, such as water vapour molecules and nitrogen oxide molecules, can diffuse and be adsorbed. In one embodiment, the solid adsorbent may be a zeolitic molecular sieve that comprises, for example, sodium aluminosilicate. The zeolitic molecular sieve may for example be a 3A or 4A zeolitic molecular sieve. Hence, as the compressed carbon dioxide rich flue gas passes through the packing 72, at least a portion of the content of water vapour of the gas is adsorbed on the solid adsorbent of the packing 72 along with a portion of the content of nitrogen oxides. The portion of the content of nitrogen oxides of the compressed gas removed in the gas drier 70 depends on the type and amount of solid adsorbent. For example 30-99.9 % of the content of nitrogen oxides of the compressed gas may be removed in the gas drier 70.

In one example, the compressed carbon dioxide rich flue gas leaving the gas drier 70 via a fluidly connected duct 74 has an absolute pressure of about 25-35 bar absolute pressure. The gas also has a reduced content of water vapour and NOₓ. Such a gas is suitable for further treatment in a CO₂ liquefaction unit 76 and a high pressure compression unit 78, prior to flowing to carbon dioxide sequestration 80 via fluidly connected duct 82, as illustrated in Fig. 2.

The gas drier 70 is provided with a gas drier regeneration system 84 for intermittent regeneration of the water vapour adsorption capacity of the gas drier 70. A supply duct 86 is arranged for supplying a regeneration gas to the regeneration system 84. The regeneration system 84 uses a portion of the carbon dioxide rich flue gas stream as regeneration gas. The portion of carbon dioxide rich flue gas stream for use as a regeneration gas is preferably withdrawn downstream of the flue gas condenser 36, but upstream of the gas drier 70, based on the flow direction of the flue gas. In the embodiment of Fig. 2, the carbon dioxide rich flue gas stream for use as regeneration gas is withdrawn immediately downstream of the flue gas condenser 36, from the fluidly connected duct 38. As an alternative, the gas stream for use as regeneration gas may be withdrawn from another location, for example from any of ducts 62, 64 and 66.

The regeneration system 84 comprises a heater 88 for heating the regeneration gas. A heating circuit 90 is connected to the heater 88 for circulating a heating medium, such as steam, in the heater 88. The heated regeneration gas leaves the heater 88 via fluidly connected duct 92. A gas transporting device, such as a blower, a compressor or a fan 91 may be arranged in the duct 92 to draw the regeneration gas from the duct 38 and further through the heater 88. A temperature sensor 94 is arranged in the duct 92 to measure the temperature of the heated regeneration gas. A valve 96 is arranged in the heating circuit 90 for controlling the flow of heating medium to the heater 88. The temperature sensor 94 controls the valve 96 to supply a suitable amount of heating medium. For regeneration of the material of the packing 72 of the gas drier 70, the heater 88 may typically heat the regeneration gas to a temperature of about 130°C to 315°C. In an embodiment where a 3A or 4A zeolitic molecular sieve is used as the desiccant material of packing 72, the regeneration temperature may preferably be in the range of about 200°C to 290°C.

Regeneration valves 98, 100 are arranged on the duct 92 and on a duct 102 respectively. During a regeneration sequence, the valves 98, 100 are opened to allow regeneration gas to be passed through the gas drier 70. Gas drier isolation valves 104, 106 are arranged on the ducts 68, 74 respectively. During a regeneration sequence, the valves 104, 106 are shut to isolate the gas drier 70 from the flow of compressed gas coming from the low pressure compression unit 48. The regeneration valves 98, 100 are opened and heated regeneration gas is supplied to the gas drier 70 from the regeneration system 84 via a duct 108 fluidly connected to the duct 92. The regeneration gas heats the material of the packing 72 and causes desorption of water vapour and nitrogen oxides, NOₓ. Spent regeneration gas, containing desorbed water vapour and NOₓ, leaves the gas drier 70 via the duct 102.

It will be appreciated that when the valves 104, 106 are closed, no carbon dioxide rich gas may pass through the gas drier 70. According to one embodiment, the GPU 40 may be provided with a further gas drier 110, parallel to the gas drier 70, with such further gas drier 110 being in operation while the gas drier 70 undergoes regeneration. An optional duct 111, illustrated with broken lines in Fig. 2, is provided for flow of the carbon dioxide rich flue gas through the optional further gas drier 110 during regeneration of the gas drier 70. Valves required to isolate the further gas drier 110 from the gas drier 70 during normal operation of the gas drier 70, and during regeneration of the further gas drier 110, are not shown in Fig. 2 for reasons of maintaining clarity of illustration. According to another embodiment, the carbon dioxide rich flue gas could by-pass the drier 70 for release to the atmosphere during the regeneration of the packing 72 of the gas drier 70.

Fig. 3 illustrates an arrangement 112 for cleaning spent regeneration gas leaving the gas drier 70 via fluidly connected duct 102 after having regenerated the packing 72. The spent regeneration gas flows via duct 102, to a fluidly connected regeneration gas cleaning wet scrubber 114. The wet scrubber 114 is provided with a pump 116, which circulates, in a circulation pipe 118, an absorption liquid from a lower end 120 of a wet scrubber tower 122 to an upper end 124 of the wet scrubber tower 122. The absorption liquid is, at the upper end 124, distributed over a wet scrubber gas-liquid contacting packing material 126 of the wet scrubber tower 122. Examples of such gas-liquid contacting packing material 126 include Mellapak™ available from Sulzer Chemtech AG, Winterthur, CH, and Pall™ rings available from Raschig GmbH, Ludwigshafen, DE.

The spent regeneration gas enters the wet scrubber tower 122 at the lower end 120 via fluidly connected duct 102 and flows in a substantially vertical direction, upwards through the wet scrubber tower 122 and is, in the wet scrubber gas-liquid contacting packing material 126, brought into contact with the absorption liquid. A cleaned regeneration gas leaves wet scrubber tower 124 via a duct 128 fluidly connected to the wet scrubber tower 122 at the upper end 124 thereof. The wet scrubber 114 would often be operated intermittently, simultaneously with the effecting of regeneration of the gas drier 70.

In accordance with an alternative embodiment the spent regeneration gas could flow to upper end 124 of wet scrubber tower 122 and pass substantially vertically downwards through tower 122, and leave tower 122 at lower end 120.

In accordance with a further alternative embodiment, the absorption liquid supplied at upper end 124 of tower 122 could be atomized by nozzles, to further enhance the contact between the absorption liquid and the spent regeneration gas.

Returning to Fig. 3, a pH controlling substance supply pipe 130 is fluidly connected to the circulation pipe 118 for supplying a pH controlling substance to the circulating absorption liquid. A pH-meter 132 is arranged for measuring the pH of the absorption liquid circulating in the circulation pipe 118. The pH-meter 132 controls a valve 134 to regulate the amount of pH controlling substance supplied via supply pipe 130. Examples of pH controlling substances that could be supplied via supply pipe 130 include alkali substances, such as NaOH, KOH, Na₂CO₃ and NaHCO₃, and acid substances, such as H₂SO₄, HCl, and HNO₃. Often an alkali substance is utilized to neutralize reaction products formed by the capture of nitrogen oxides, as will be described in more detail hereinafter, but in some cases the carbon dioxide rich flue gas may in itself contain trace amounts of alkali substances that call for a supply of an acid substance to maintain a desired pH in the absorption liquid circulating in the circulation pipe 118. Typically, the pH of the absorption liquid circulating in the circulation pipe 118 is controlled to a pH in the range of pH 5-8.

Furthermore, an oxidizer supply pipe 136 is fluidly connected to the circulation pipe 118 for supplying an oxidizer to the circulating absorption liquid. A redox potential meter 138 may, as an option, be arranged for measuring the redox potential of the absorption liquid circulating in the circulation pipe 118. The redox potential meter 138 controls a valve 140 to regulate the amount of oxidizer supplied via oxidizer supply pipe 136 to maintain a desired redox potential in the absorption liquid. According to an alternative embodiment, the supply of oxidizer is fixed, with a fixed volume of oxidizer solution supplied per hour. According to a further alternative embodiment, the supply of oxidizer solution could be based on the amount of spent regeneration gas passing through the wet scrubber 114.

Examples of oxidizers that could be supplied via oxidizer supply pipe 136 include potassium permanganate, KMnO₄, hydrogen peroxide, H₂O₂, and ozone, O₃. Typically, the oxidizer would be supplied in the form of an aqueous solution, or as a gas. In cases of supplying the oxidizer in gaseous form, for example when supplying an oxidizer in the form of ozone, O₃, an optional gas mixer device 131 could be arranged in the duct 102, upstream of the wet scrubber 114. The gaseous oxidizer may be supplied to the gas mixer device 131 via an oxidizer supply pipe 133. The gas mixer device 131 may be provided with static mixer plates 135 to mix the supplied gaseous oxidizer with the spent regeneration gas before the spent regeneration gas enters the wet scrubber 114. Hence, the ozone supplied via pipe 133 is first mixed with the gas, in the gas mixer device 131, before flowing to the absorption liquid of the wet scrubber 114.

The cleaned spent regeneration gas leaving wet scrubber tower 122 via duct 128 is forwarded to flue gas condenser 36 via duct 34 to which the duct 128 is fluidly connected. The flue gas condenser 36 is provided with a pump 142 to circulate, in a circulation pipe 144, a cooling liquid from a lower end 146 of a condenser housing 148 to an upper end 150 of the housing 148. The cooling liquid is, at the upper end 150, distributed over a condenser gas-liquid contacting packing material 152 arranged inside 148a the housing 148. The gas-liquid contacting packing material 152 could be of a similar type as the packing material 126 described hereinbefore. A liquid cooler 154 is arranged in the circulation pipe 144 for cooling the cooling liquid. The partly cleaned carbon dioxide rich flue gas transported from the boiler 2 via duct 34 and the cleaned regeneration gas transported from wet scrubber 114 via duct 128 are combined for a common flow that enters housing 148 at the lower end 146 via fluidly connected duct 156 and flows in a substantially vertical direction, upwards through the housing 148 and through packing material 152 cooled by cooling liquid supplied via circulation pipe 144. As an effect of such cooling, at least a portion of a content of water vapour of the partly cleaned carbon dioxide rich flue gas and of the cleaned regeneration gas condenses and forms a condensate. Such condensate leaves flue gas condenser 36 via disposal pipe 37 for further treatment, as described hereinbefore. Optionally, waste liquid coming from the wet scrubber 114 via a further disposal pipe 158 could be combined with the condensate of disposal pipe 37 and transported away for further treatment together therewith. For example, the combined liquid could be transported to a waste water treatment plant 160. Optionally, a pH controlling substance, such as NaOH, may be supplied to the circulating cooling liquid of pipe 144 via fluidly connected pipe 162 to maintain a constant pH value of the circulating cooling liquid.

According to an alternative embodiment, the waste liquid coming from the wet scrubber 114 via the further disposal pipe 158 could flow via a pipe 164, to a separate waste water treatment plant 166. As such, the waste liquids from the wet scrubber 114 and the flue gas condenser 36 could be treated separately according to their specific compositions. The cleaned carbon dioxide rich flue gas, together with the cleaned and cooled regeneration gas, leaves the flue gas condenser 36 via the fluidly connected duct 38 and is forwarded to the GPU 40. As described hereinbefore with reference to Fig. 2, a portion of the gas flowing through duct 38 may be forwarded, via duct 86, to heater 88 of gas drier regeneration system 84, for heating and use as a regeneration gas in the regeneration of packing material 72 of gas drier 70.

An optional by-pass duct 168 may be fluidly connected to ducts 102 and 34. When the concentration of nitrogen oxides in the regeneration gas drops below a predetermined value, it may no longer be necessary to clean the spent regeneration gas in the wet scrubber 114. On such an occasion, a valve 170 may be opened for a flow of at least a portion of the spent regeneration gas from duct 102 directly to the flue gas condenser 36 via fluidly connected ducts 168 and 34, such that at least a portion of the spent regeneration gas by-passes the wet scrubber 114. Optionally, an optional further valve 171, arranged in the duct 102 just upstream of the wet scrubber 114, may be closed in conjunction with opening valve 170, such that most, if not all of the gas by-passes the wet scrubber 114 on such occasion. The opening of valve 170 may, for example, be initiated either based on an actual measurement of the concentration of nitrogen oxides in duct 102, or may be initiated a fixed time after start of the regeneration sequence, as found by, for example, empirical experiments, by which fixed time the concentration of nitrogen oxides has been found to be sufficiently low.

Fig. 4 is a diagram illustrating the concentration of nitrogen oxides of spent regeneration gas as a function of the time elapsed since the regeneration of the gas drier 70 was initiated. The x-axis depicts the time, in hours, and the y-axis depicts the concentration of nitrogen oxides, in mg of NOₓ per Nm³ of spent regeneration gas, as a function of the time. As can be seen from Fig. 4, the concentration of nitrogen oxides of the spent regeneration gas has a rather narrow peak. Hence, the nitrogen oxides collected on the solid adsorbent of the packing 72 of gas drier 70 is released during a rather limited period of time. According to one embodiment, the wet scrubber 114 described hereinbefore with reference to Fig. 3, is operated in coordination with the release of nitrogen oxides from the solid adsorbent of the gas drier 70. According to such embodiment, the spent regeneration gas flows through the wet scrubber 114 when the concentration of nitrogen oxides in the spent regeneration gas is high, and is forwarded directly through the condenser 36 when the concentration of nitrogen oxides in the spent regeneration gas is low. In accordance with one example, a regeneration of the gas drier 70 is started at the time T0 illustrated in Fig. 4. At the time T1 the concentration of nitrogen oxides of the spent regeneration gas starts to increase sharply. Thus, at the time T1 the valve 170 is closed meaning that the spent regeneration gas flows through the wet scrubber 114, where removal of nitrogen oxides occurs. At the time T2 the concentration of nitrogen oxides has again fallen to a low concentration. Thus, at the time T2 the valve 170 is opened to cause most, if not all, of the spent regeneration gas to by-pass the wet scrubber 114 and enter directly into the condenser 36. The regeneration of the gas drier 70 is finalized at the time T3. In such an embodiment, the regeneration of the gas drier 70 occurs during a regeneration period starting at T0 and ending at T3. The spent regeneration gas flows through the wet scrubber 114 during a scrubbing period starting at T1 and ending at T2 and forming a part of the regeneration period. Typically, the scrubbing period (T1 to T2) would have a duration of 20-80 % of the duration of the complete regeneration period (T0 to T3). Hence, with such a method, the wet scrubber 114 is operated when needed to remove nitrogen oxides, and at other times the spent regeneration gas is, at least partly, forwarded directly to the condenser 36. Such process reduces consumption of power, oxidizer, etc. in the wet scrubber 114. The timing of turning on and off the scrubber 114, i.e., the timing of T1 and T2, may, for example, be determined by measuring the concentration of nitrogen oxides in the spent regeneration gas on a continuous basis, or at specific tests performed in conjunction with, for example, the start-up of the GPU 40. The timing of the release of nitrogen oxides from the gas drier 70 may also be predicted from scientific calculations or experiences from other installations. Thus, the timing of the scrubbing period could be based on measurements and/or predictions of the release of the nitrogen oxides from the gas drier 70.

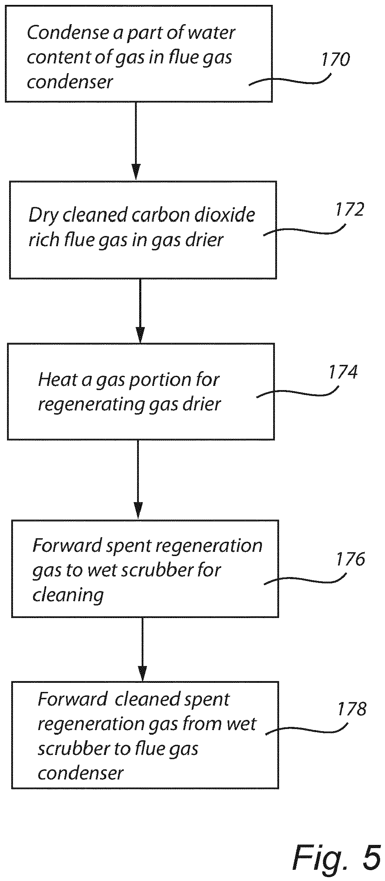

Fig. 5 illustrates one method embodiment of cleaning a carbon dioxide rich flue gas.

In a first step 170, at least a portion of a water content of an at least partially cleaned carbon dioxide rich flue gas is condensed in a flue gas condenser 36.

In a second step 172, more water is removed from the at least partially cleaned carbon dioxide rich flue gas coming from the flue gas condenser 36 by passing the gas through a gas drier 70. In addition to water, a packing 72 of the gas drier 70 may also remove other components, including nitrogen oxides, from the gas passing therethrough. "Nitrogen oxides" include nitrogen mono-oxide, NO, and nitrogen dioxide, NO₂.

In a third step 174 a gas portion is heated and is used as a regeneration gas for regenerating the packing of the gas drier 70. Such gas portion may, for example, be collected downstream of the flue gas condenser 36, as illustrated in Figs. 2 and 3. The regeneration of the gas drier 70 causes a release of water vapour, and of nitrogen oxides, NO and NO₂, and possibly trace amounts of other substances, to the regeneration gas.

In a fourth step 176 spent regeneration gas, containing water vapour, and nitrogen oxides, NO and NO₂, flows from the gas drier 70 to a wet scrubber 114 for cleaning. In the wet scrubber 114 at least a portion of nitrogen oxides are removed from the spent regeneration gas. If an oxidizer is supplied via pipe 136 such oxidizer may support oxidation of nitrogen mono-oxide, NO, into nitrogen dioxide, NO₂. For example, if the oxidizer hydrogen peroxide, H₂O₂, is supplied to the wet scrubber 114 the following oxidation reaction may occur:

NO + H₂O₂ → NO₂ + H₂O [eq. 1.1]

Oxidation of nitrogen mono-oxide, NO, to form nitrogen dioxide, NO₂, may also occur spontaneously in the presence of minor amounts of oxygen present in the carbon dioxide rich flue gas, and in the regeneration gas, both in the packing 72 of the gas drier 70, and in the wet scrubber 114. Hence, an oxidizer may not be necessary to obtain oxidation of nitrogen mono-oxide. Furthermore, the compression of carbon dioxide rich flue gas by compressor 41 illustrated in Fig. 2 promotes oxidation of nitrogen mono-oxide, NO, to form nitrogen dioxide, NO₂. Such pressure promoted oxidation of nitrogen mono-oxide reduces the consumption of oxidizer.

The nitrogen dioxide, NO₂, may then be converted into nitric acid, HNO₃ in the wet scrubber 114:

3 NO₂ + H₂O → NO + 2 HNO₃ [eq. 1.2]

Finally, the formed nitric acid may be neutralised by an alkali substance supplied via pH controlling substance supply pipe 130. For example, if sodium hydroxide, NaOH, is supplied to the wet scrubber 114 the following neutralisation reaction may occur:

HNO₃ + NaOH → NaNO₃ + H₂O [eq. 1.3]

The formed sodium nitrate, NaNO₃ is dissolved in the circulating absorption liquid of the wet scrubber 114, and is disposed via the further disposal pipe 158, for example for further treatment in the water treatment plant 166. The neutralisation of nitric acid according to eq. 1.3 reduces the equilibrium vapour pressure of nitrogen oxides, and pushes eq. 1.2 to the right, making the absorption of nitrogen dioxide, NO₂, more efficient. Typically, about 60-99.9 % of the total amount of nitrogen dioxide, NO₂, entering the wet scrubber 114 would be removed from the spent regeneration gas, along with typically 20-95 % of the total amount of nitrogen mono-oxide, NO, entering the wet scrubber 114.

In a fifth step 178 the cleaned regeneration gas flows from the wet scrubber 114 to the flue gas condenser 36. In the flue gas condenser 36 at least a portion of the amount of water vapour of the cleaned regeneration gas is condensed.

Hence, with the present method, the regeneration of the gas drier 70 becomes efficient with respect to consumables, such as energy and gas, release of nitrogen oxides to the atmosphere is avoided, or at least reduced, and accumulation of nitrogen oxides in the partially cleaned carbon dioxide rich flue gas is avoided, or at least reduced.

It will be appreciated that numerous variants of the embodiments described above are possible within the scope of the appended claims.

Hereinbefore it has been described that the portion of carbon dioxide rich flue gas stream for use as regeneration gas is withdrawn downstream of the flue gas condenser 36, but upstream of the gas drier 70. It will be appreciated that a regeneration gas can be obtained also at other locations. In accordance with alternative embodiments, a regeneration gas can be withdrawn from any one of ducts 62, 64, 108 and 74. It is also possible to use another type of regeneration gas, such as ambient air. An advantage of withdrawing a regeneration gas from duct 38 is that such regeneration gas has a relatively low concentration of water vapour, and has a low content of oxygen. Furthermore, compression work has not yet been added to the regeneration gas. Regeneration of the gas drier 70 is often performed at atmospheric pressure, in particular if spent regeneration gas is to be returned upstream of the flue gas condenser 36. Hence, a pressure above ambient of the regeneration gas may not be useful.

Hereinbefore it has been described that a solid adsorbent, for example a zeolitic molecular sieve, is utilized as the packing 72 of the gas drier 70. According to an alternative embodiment a liquid desiccant is utilized for contacting flue gas and capturing water vapour in the gas drier 70. Examples of liquid desiccants that could be utilized in such embodiment include diethylene glycol, triethylene glycol, and tetraethylene glycol, as described in section 20 of the GPSA Engineering Data Book, 2004, 12th Edition, ISBN: B00006KFVO.

According to one embodiment the gas condenser 36 may perform both the function of removing at least a portion of the water content of the flue gas, and the function of being a wet scrubber removing at least a portion of nitrogen oxides from the spent regeneration gas. In such case, the spent regeneration gas may flow via optional duct 129, directly to the gas condenser 36. Optionally, an oxidizer, such as potassium permanganate, KMnO₄, hydrogen peroxide, H₂O₂, and/or ozone, O₃, could be supplied to the gas condenser 36 to oxidize the nitrogen oxides captured therein.

To summarize, a gas purification system for cleaning a carbon dioxide rich flue gas stream comprises:
a flue gas condenser 36 operative for removing at least a portion of a water content of the flue gas;
a gas drier 70 arranged downstream of the flue gas condenser 36 for removing at least a portion of a remaining water content of the flue gas;
a gas drier regeneration system 84 arranged for generating a regeneration gas for desorbing water and nitrogen oxides from the gas drier 70; and
a wet scrubber 114 for bringing a spent regeneration gas from the gas drier 70 into contact with an absorption liquid for removing at least a portion of nitrogen oxides from the spent regeneration gas to form a cleaned regeneration gas.

While the invention has been described with reference to a number of preferred embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed as the best mode contemplated for carrying out this invention, but that the invention will include all embodiments falling within the scope of the appended claims. Moreover, the use of the terms first, second, etc. do not denote any order or importance, but rather the terms first, second, etc. are used to distinguish one element from another.

## Claims

1. A method of cleaning a carbon dioxide rich flue gas generated in a boiler (2) combusting a fuel in the presence of a gas containing oxygen gas, the method comprising:
removing at least a portion of a water content of the flue gas in a flue gas condenser (36);
removing at least a portion of a remaining water content of the flue gas and at least a portion of a content of nitrogen oxides of the flue gas using a gas drier (70) arranged downstream of the flue gas condenser (36);
regenerating the gas drier (70) by heating a flow of regeneration gas to a temperature suitable for regeneration of the gas drier (70), and passing the heated regeneration gas through the gas drier (70) to desorb water and nitrogen oxides from the gas drier (70); and
forwarding spent regeneration gas from the gas drier (70) to a wet scrubber (114) for contact with an absorption liquid for removing at least a portion of nitrogen oxides from the spent regeneration gas to form a cleaned regeneration gas.

2. A method according to claim 1, further comprising obtaining the flow of regeneration gas by withdrawing a portion of the carbon dioxide rich flue gas downstream of the flue gas condenser (36).

3. A method according to any one of the preceding claims, further comprising obtaining the flow of regeneration gas by withdrawing a portion of the carbon dioxide rich flue gas upstream of the gas drier (70).

4. A method according to any one of the preceding claims, further comprising forwarding a flow of cleaned regeneration gas from the wet scrubber (114) to the flue gas condenser (36) for cooling therein.

5. A method according to any one of the preceding claims, further comprising supplying an oxidizer to the absorption liquid of the wet scrubber (114).

6. A method according to any one of the preceding claims, further comprising supplying a pH controlling substance to the absorption liquid of the wet scrubber (114).

7. A method according to any one of the preceding claims, wherein the temperature suitable for regeneration of the gas drier is in the range of 130 °C to 315 °C, more preferably in the range of 200°C to 290°C.

8. A method according to any one of the preceding claims, wherein the wet scrubber (114) is separate from the flue gas condenser (36).

9. A method according to any one of the preceding claims, further comprising forwarding spent regeneration gas from the gas drier (70) through the wet scrubber (114) during a scrubbing period forming a part of a regeneration period during which the gas drier (70) is regenerated, and controlling the duration and timing of the scrubbing period in view of a release of nitrogen oxides from the gas drier (70).

10. A gas purification system for cleaning a carbon dioxide rich flue gas stream generated in a boiler (2) combusting a fuel in the presence of a gas containing oxygen gas, the gas purification system comprising:
a flue gas condenser (36) operative for removing at least a portion of a water content of the flue gas;
a gas drier (70) arranged downstream of the flue gas condenser (36) for removing at least a portion of a remaining water content of the flue gas and at least a portion of a content of nitrogen oxides of the flue gas;
a gas drier regeneration system (84) arranged for generating a regeneration gas for desorbing water and nitrogen oxides from the gas drier (70); and
a wet scrubber (114) for bringing a spent regeneration gas from the gas drier (70) into contact with an absorption liquid for removing at least a portion of nitrogen oxides from the spent regeneration gas to form a cleaned regeneration gas.

11. A gas purification system according to claim 10, further comprising a supply duct (86) arranged downstream of the flue gas condenser (36) for flow of a regeneration gas to the gas drier regeneration system (84).

12. A gas purification system according to any one of claims 10-11, further comprising a supply duct (86) arranged upstream of the gas drier (70) for flow of a regeneration gas to the gas drier regeneration system (84).

13. A gas purification system according to any one of claims 10-12, wherein at least one compressor (41) for compressing the carbon dioxide rich flue gas is arranged downstream of the flue gas condenser (36) and upstream of the gas drier (70), and a supply duct (86) is arranged upstream of the compressor (41) for flow of a regeneration gas to the gas drier regeneration system (84).

14. A gas purification system according to any one of claims 10-13, further comprising a duct (128) for flow of cleaned regeneration gas from the wet scrubber (114) to the flue gas condenser (36) for cooling therein.

15. A gas purification system according to any one of claims 10-14, further comprising an oxidizer supply pipe (136; 133) arranged for supplying an oxidizer to the absorption liquid of the wet scrubber (114).

16. A gas purification system according to any one of claims 10-15, wherein the gas drier (70) contains a solid adsorbent.
